# EUROPEAN PATENT APPLICATION

(11) **EP 2 230 110 A2**
(43) Date of publication of application: **22.09.2010**
(21) Application number: 10075118.9
(22) Date of filing: 16.03.2010
(51) Int. Cl.: B60H 1/00

(54) **HVAC system**

(30) Priority: 18.03.2009 US 202614 P
(71) Applicant: Glacier Bay, Inc., Union City CA 94587 (US)
(72) Inventor: Lyons, Dave, Union City, CA 94587 (US); Alston, Gerald Allen, Union City, CA 94587 (US); Preston, Mark, Union City, CA 94587 (US); Knauer, Paul, Union City, CA 94587 (US); Dobbs, Justin, Union City, CA 94587 (US); Petersen, Ethan, Union City, CA 94587 (US); Hoffman, Marc, Union City, CA 94587 (US)
(74) Representative: Fischer, Uwe

(57) **Abstract**

A climate control system for vehicle installation includes a system configured to provide at least one of heating and cooling of air in a cabin of the vehicle, an energy storage module configured to provide energy to the system, a user interface for receiving user input and for providing output to the user, and a controller configured to operate the system. The controller receives weather data and receives temperature data related to a temperature outside of the cabin and a temperature inside of the cabin; calculates an expected heating or cooling load based on a temperature setpoint, the weather data, and the temperature data; calculates whether there is sufficient energy in the energy storage module to meet the expected load; controls normal operation of the system if there is sufficient energy; and otherwise prompts for user action via the user interface.

## Description

### CROSS-REFERENCE TO RELATED PATENT APPLICATIONS

This application claims priority to and the benefit of U.S. Provisional Application No. 61/202,614, filed March 18, 2009, which is herein incorporated by reference in its entirety.

### BACKGROUND

There are many applications where environment climate control for occupants is desirable, but where the primary system for providing that climate control may not be operating or may be forced to be non-operational.

One climate control application is for trucks that move goods, for example across the country. Truck drivers may be required to pull over at various times along their journey to rest so that they do not become too fatigued. Common places for truck drivers to rest include rest stops, toll plazas, and the like. However, these locations generally do not have accommodations for the drivers and as a result the drivers usually remain inside the cab of the truck in a sleeping compartment. To provide the driver with maximum comfort, the sleeping compartment should be temperature controlled so that the environment in the truck is conducive for the driver to get the rest he or she needs.

Currently, trucks and other vehicles tend to use engine-belt driven compressors for the air conditioning system to circulate and pump refrigerant throughout the vehicle to cool the driving compartments. In addition, an engine-belt driven pump can circulate engine waste heat throughout the driving compartments when heating is required. Unfortunately, belt driven systems have the drawback of not being able to operate when the engine is turned off. As a result, the driver has a choice of keeping the engine running (which requires additional fuel) to run the temperature control system or turning the engine off and not using the air conditioning or heating systems (which can make the driver uncomfortable).

Another climate control application may be in hybrid-electric vehicles or marine vessels. Hybrid-electric vehicles and marine vessels require cabin cooling or heating at times when the vehicle or vessel is operating in an "all-electric" mode or a "quiet" mode. In such electric or quiet modes, the internal combustion engine is not able to power the primary air conditioning system and/or provide waste heat that can be used to heat the occupant cabin. Other climate control applications may be beneficial for generator powered buildings or structures that may require supplemental or primary cooling/heat during periods of non-operation of the primary generator.

It would be desirable to provide a system for anticipating potential shortfalls in a backup or secondary air conditioning system and to provide a way to minimize the effect of the shortfall on the interior ambient temperature.

### SUMMARY

According to one exemplary embodiment, a climate control system for vehicle installation includes a heating and cooling system configured to provide at least one of heating and cooling of air in a cabin of the vehicle, an energy storage module configured to provide energy to the heating and cooling system, a user interface for receiving user input and for providing output to the user, and a controller configured to operate the heating and cooling system. The controller receives weather data and receives temperature data related to a temperature outside of the cabin and a temperature inside of the cabin. The controller calculates an expected heating or cooling load based on a temperature setpoint, the weather data, and the temperature data. The controller calculates whether there is sufficient energy in the energy storage module to meet the expected load. The controller controls normal operation of the heating and cooling system if there is sufficient energy and prompts for user action via the user interface if there is not sufficient energy.

According to another exemplary embodiment, a method for operating a heating and cooling system powered by an energy storage module includes receiving weather data at a controller, receiving temperature data related to a temperature outside of the cabin and a temperature inside of the cabin at the controller, calculating an expected heating or cooling load based on a temperature setpoint, the weather data, and the temperature data using the controller, calculating whether there is sufficient energy in the energy storage module to meet the expected load using the controller, controlling normal operation of the heating and cooling system using the controller if there is sufficient energy, and prompting for user action on a user interface if there is not sufficient energy.

According to another exemplary embodiment, a method for operating a vehicle heating and cooling system powered by an energy storage module includes receiving weather data at a controller, receiving temperature data related to a temperature outside of the cabin and a temperature inside of the cabin at the controller, calculating a temperature difference between the temperature outside of the cabin and the temperature inside of the cabin using the controller,
calculating an expected heating or cooling load based on a temperature setpoint, the weather data, and the temperature difference using the controller, calculating whether there is sufficient energy in the energy storage module to meet the expected load using the controller controlling normal operation of the heating and cooling system using the controller if there is sufficient energy, and prompting for user action on a user interface if there is not sufficient energy.

It is to be understood that both the foregoing general description and the following detailed description are exemplary and explanatory only, and are not restrictive of the invention as claimed.

### BRIEF DESCRIPTION OF DRAWINGS

These and other features, aspects, and advantages of the present invention will become apparent from the following description, appended claims, and the accompanying exemplary embodiments shown in the drawings, which are briefly described below.

FIG. 1 is an isometric view of a vehicle including a heating system according to an exemplary embodiment.

FIG. 2 is a block diagram of an optimized HVAC system configured to use current, predicted, and historic weather data according to an exemplary embodiment.

FIG. 3 is a flowchart illustrating operation of the system of FIG. 2 according to an exemplary embodiment.

FIG. 4 is a flowchart illustrating a periodic update process in the operation of FIG. 3 according to an exemplary embodiment.

### DETAILED DESCRIPTION

Hereinafter, various embodiments of the present invention will be described in detail with reference to the drawings.

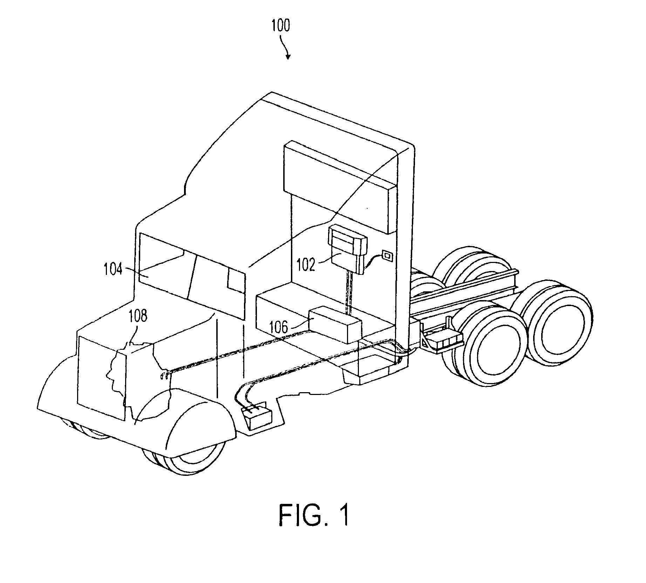

Referring to FIG. 1, according to various exemplary embodiments, a vehicle 100 may include an HVAC system 102 configured to provide climate control of a vehicle cabin 104. In situations where the primary engine or generator is not operating, the vehicle 100, a building, or a structure may rely on stored power from a variety of sources to provide heating and/or cooling for the occupied space when the primary system is not running (e.g., battery system, fuel system (chemical energy), phase-change material system, or various other systems). According to one exemplary embodiment, the HVAC system 102 may be an HVAC system installable in the vehicle 100 and having an energy storage module 106 connected to the vehicle's existing power system 108 (e.g., an engine). The HVAC system 102 may be controlled in a way that makes optimized use of stored power in module 106 to condition the air for the occupied space of the cabin 104.

According to various exemplary embodiments, the features described herein may be employed with an HVAC system disclosed in U.S. Patent Application No. 12/320,213, filed January 21, 2009, or in U.S. Patent Application No. 11/560,160, filed on November 15, 2006, each of which is incorporated herein by reference in its entirety.

Currently, trucks tend to use engine-belt driven compressors for the air conditioning system to circulate and pump refrigerant throughout the vehicle to cool the driving compartments. In addition, an engine-belt driven pump can circulate engine waste heat throughout the driving compartments when heating is required.

In various exemplary embodiments, at least a portion of the power and/or waste heat generated by the engine 108 is transferred to the storage device 106. The storage device 106 may be, for example, a battery charged by an alternator driven by the engine, a thermal storage device, or any other suitable energy storage device. The storage device 106 may also be independent of the engine 108, such as a secondary fuel tank. As described below, according to some exemplary embodiments, the stored energy is used to heat or cool the vehicle cabin 104 or other occupied rooms or spaces with the HVAC or heating and cooling system 102. Such occupied rooms are generally heated or cooled by powered equipment while the engine 100 is running.

The storage device 106 uses the stored energy when the engine 100 is off to heat or cool air supplied to the occupied areas of the vehicle, for example the cabin 104. The heating and cooling system 102 includes an intelligent control system configured to optimize performance to the cabin occupants based on their situational needs and comfort levels. The heating and cooling system 102 may be a "hybrid" heating system that combines multiple forms of heating in an optimized system. For example, a radiant panel and a fuel-fired heater may be used together such that the panel warms the driver while he or she is in the bunk, while a motion sensor turns on the fuel-fired heater when the driver gets up to heat the remainder of the cabin 104.

The power required to operate the heating and cooling system 102 is directly related to the difference (delta T) between the exterior ambient temperature (Toutside) and the desired interior cabin temperature (Tset) or temperature setpoint. The larger the temperature difference, the greater the power required to maintain the desired interior cabin temperature.

The energy to drive the heating and cooling system 102 is stored in the energy storage system or module 106, as described above. Because the amount of stored energy in the energy storage system 106 is finite, the heating and cooling ability of the system 102 is, in turn, also finite. For example, on especially cold or hot nights the heating or cooling load needed to maintain the desired interior cabin temperature may exceed the amount of heating or cooling that can be done with the stored energy. To make efficient use or consumption of the stored energy, the heating and cooling system 102 may be configured to make trade-offs between system power (energy consumption rates) and system performance (heating or cooling output) under certain high temperature difference conditions.

While the heating and cooling system 102 as generally described herein may be configured so that energy storage module 106 serves as a secondary power source, according to other exemplary embodiments, the energy storage module 106 may not be limited to use as a backup power source. In some exemplary embodiments, the system may be configured so that the energy storage module 106 is the main source of energy for the heating and cooling system 102. For example, the heating and cooling system 102 may be powered in most situations by energy from the energy storage module 106. In exemplary embodiments where the energy storage module provides primary power, an engine powered generator or an off truck power source (i.e., shore power) system may be used to charge the energy storage module 106.

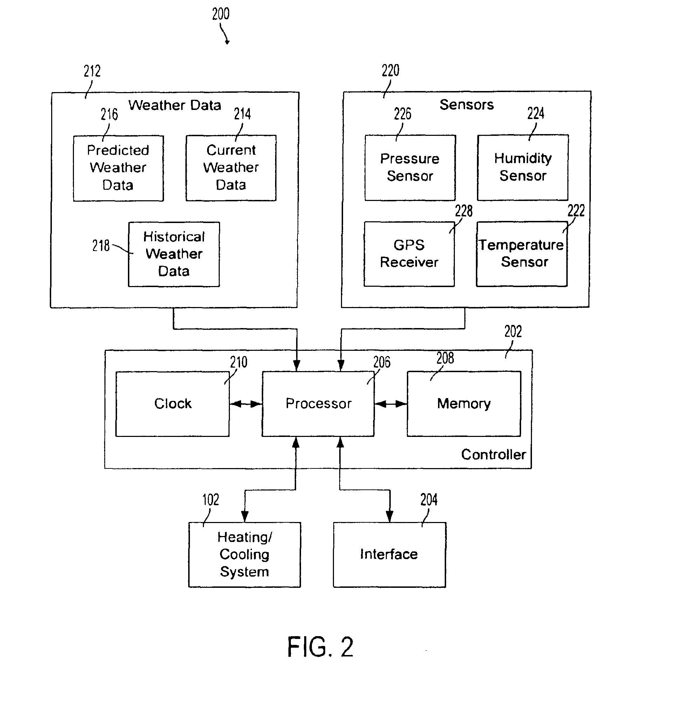

Referring to FIG. 2, a block diagram of a control system 200 for controlling for the heating and cooling system 102 is shown according to an exemplary embodiment. The system 200 includes a controller 202 configured to operate the heating and cooling system 102 and to determine various parameters such as the fan speed, the heating or cooling duration, etc. The controller 202 further monitors the amount of energy stored in the energy storage device 106.

The controller 202 is coupled to a user interface 204 to allow a user to manually adjust the heating and cooling system 102. According to various exemplary embodiments, the user interface 104 may include any combination of rotary knobs, pushbuttons, sliding switches, or other types of switches for receiving user input. Alternatively, the user interface 104 may include a touchscreen panel for receiving user input. According to some exemplary embodiments, the user interface 104 may include a display to provide visual feedback to the user, for example a graphical and/or textual representation of a temperature or fan setting or an alert or warning. The user interface may also include a speaker for providing audible feedback, for example audible feedback of buttons pressed or of alerts or warnings.

The controller 202 includes a processor 206, a memory 208, and a clock 210. The processor 206 may be any computer processor configured to execute operations or instructions for controlling the heating and cooling system 102. The processor 206 may execute operations stored on the memory 208 and may store data to the memory 208. The processor 206 may be a synchronous processor that executes operations based on a clock signal received from the clock 210. Alternatively, the processor 206 may be asynchronous and the clock 210 may be omitted or used for other purposes. The processor 206 may use the clock 210 to synchronize received or retrieved external data. According to various exemplary embodiments, the memory may be a volatile memory (e.g., RAM, DRAM, SRAM, etc.) or a non-volatile memory (e.g., ROM, flash memory, hard disk, floppy disk, optical disc, etc.). While the processor 206 is described as executing operations, according to other exemplary embodiments, the processor 206 may be an analog or digital hardwired circuit or may be embodied as software for execution on circuitry.

The controller 202 is further configured to receive weather data 212 (related to weather outside of the cabin 104) for controlling the heating and cooling system 102. The weather data may include current weather data 214, predicted weather data 216, and/or historical weather data 218. A large amount of weather data may be known or may be inferred by predictive algorithms regarding expected future exterior ambient temperatures for the vehicle 100 (or a vessel or structure). The weather data 212 may be received from local weather sensors or by querying databases of weather information for the given location or region that the system is operating. The controller 202 may use the current weather data 214, the predicted future weather data 216 , and/or the historic weather data 218 specific to a current location/region, date, and time. The weather data 212 may be collected in real-time from databases maintained off the vehicle 100 through a wireless communication system (e.g., cellular system, satellite system, WAN system, WiMAX system, etc.), a wired communication system (e.g., Ethernet, serial, parallel, etc.), or other methods. The weather data 212 may be stored on servers maintained on an internal network. Alternatively, controller 202 may use the Internet to access other public and private weather databases. The weather data 212 may also be loaded onto local databases in the system 200 prior to the time of use and requiring no real-time connectivity to outside databases. It is noted that according to other exemplary embodiments, additional weather data 212 may be received or some of the weather data 212 may be omitted.

The controller 202 is further configured to receive sensor data 220 that is collected by sensors on the vehicle 100, a vessel, or a structure. The sensor data 220 may include a temperature sensor 222, a humidity sensor 224, a pressure sensor 226, and a GPS receiver 228. The GPS (global positioning system) data may be collected to determine the location of the vehicle 100 and to more accurately collect relevant weather data 212. It is noted that according to other exemplary embodiments, the sensor data may be received from additional sensors or various illustrated sensors may be omitted.

The sensor data 220, the weather data 212, and predictive algorithms (e.g., stored on the memory 208) are then used by the controller 202 to estimate or predict the outside temperature for a predetermined amount of time. For example, the controller 202 may estimate the outside temperature for a time until the heating and cooling system 102 is expected to maintain a certain interior temperature in the cabin 104 using stored power from storage module 106.

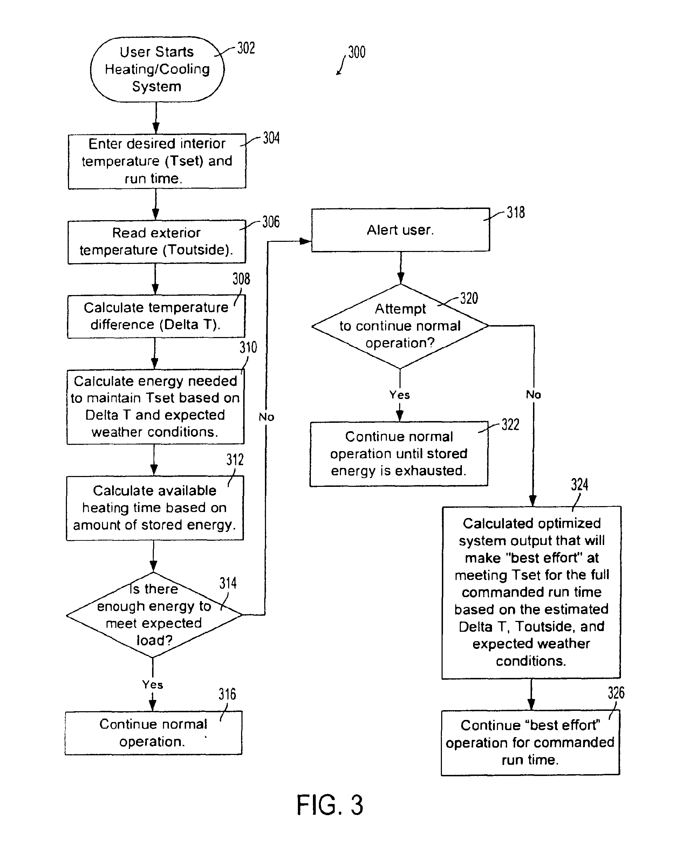

Referring now to FIG. 3, a method 300 may be executed on the controller 202 for efficiently regulating the temperature of an occupied space (e.g., the cabin 104) using stored energy (e.g., from storage module 106) according to an exemplary embodiment. A user first starts the process either manually or automatically (step 302). For example, the heating and cooling system 102 may start automatically when the primary energy source, such as the vehicle engine 108, is turned off.

A desired interior temperature (Tset) and run time is entered by the user (e.g., using the interface 204) (step 304). The controller 202 then determines or reads the exterior temperature (Toutside) using external sensors, for example the temperature sensor 222 (step 306). The controller 202 then calculates a current temperature difference (Delta T) (step 308).

Based on the current temperature difference, the vehicle 100 or building location, and the weather data 212, the controller 202 calculates an expected heating or cooling load and the energy that may be needed to maintain the desired interior temperature over a predetermined period of time (step 310). The controller 202 then calculates the available heating time based on the amount of stored energy (step 312). The controller 202 compares the power demands of the calculated heating or cooling load with the available power stored in the storage device 106 (step 314). If there is sufficient stored power, the controller 202 continues normal operation to maintain the desired interior temperature (step 316).

If there is insufficient stored power, the controller alerts or warns the user via the interface 104 (step 318). Such a warning may include an audible alert, flashing or blinking lights, or a graphical/textual display to alert the user of the error condition. The controller 202 may allow the user to choose between various trade-offs. For example, the controller 202 may prompt the user whether to attempt to continue at normal operation (step 320). If the user chooses to attempt normal operation, the heating cooling system 102 may continue normal operation to attempt to meet the desired interior temperature (Tset) at full system capacity until stored energy is exhausted (step 322). Alternatively, the user may direct the heating and cooling system 102 to attempt to meet the desired interior temperature (Tset) at full system capacity, but for a selected run time.

If the user decides not to attempt normal operation, the controller 202 may calculate an optimized system output that will make a "best effort" at meeting the desired interior temperature for the full run time based on the estimated temperature difference, exterior temperature, and expected weather conditions (step 324). The controller 202 continues the best effort operation for the run time (step 326). According to another exemplary embodiment, the heating and cooling system 102 may include multiple heating or cooling elements, such as air-to-air heat exchangers, liquid-to-air heat exchangers, and temperature controlled elements such as heated seats, blankets or mattresses. The user may turn various elements on or off to lower the heating or cooling load.

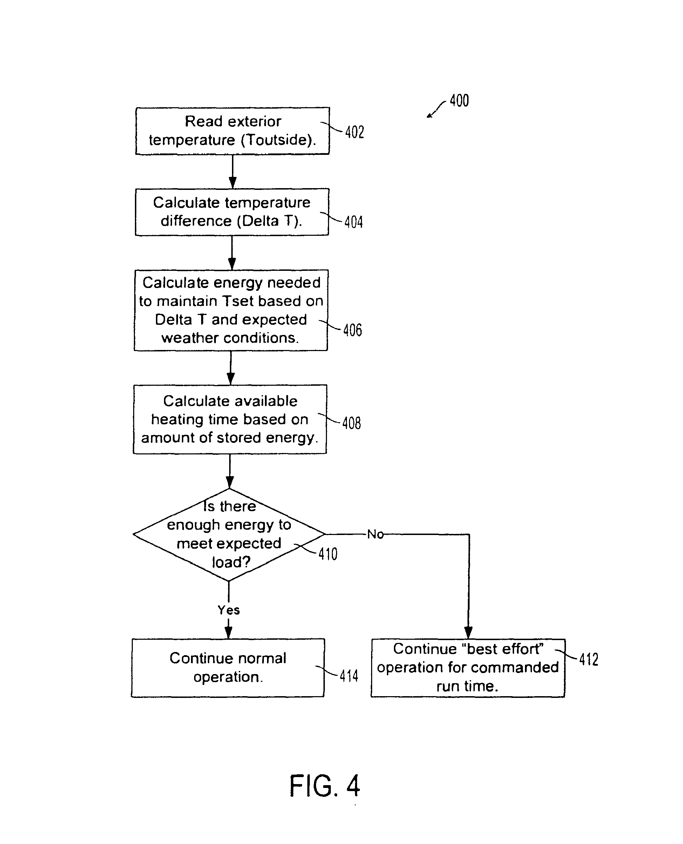

As shown in FIG. 4, the controller 202 may further include an automatic maintenance or check-up process 400 that may execute periodically during run time (e.g., while the user is sleeping) in the method 300 of FIG. 3. The controller 202 may continually or periodically monitor various criteria such as the external temperature (Toutside from temperature sensor 222) and the predicted weather data 216 (step 402). Using the monitored temperature, the controller 202 calculates the temperature difference (Delta T) between the outside and the cabin 104 (step 404). The controller 406 calculates the expected heating or cooling load or energy needed to maintain the desired temperature (Tset) based on the calculated temperature difference and expected weather conditions (step 406). The controller 202 then calculates the amount of heating/cooling time available based on the amount of stored energy in storage module 106 (step 408). The controller 202 determines whether the heating/cooling time available is sufficient to meet the expected energy or heating/cooling load needed (step 410). If the stored power is not enough to meet the expected heating or cooling load, the controller 202 continues as directed by the user, for example continuing "best effort" operation for the commanded run time (step 412). If the power needed to meet the heating or cooling load has been reduced as compared to earlier estimates such that the stored power may meet the heating or cooling load, the controller 202 proceeds with normal or full operation (step 414).

Because weather often changes unpredictably, the expected heating or cooling load may increase over the course of the run time (e.g., if the exterior temperature rises or falls beyond what was predicted using the weather data). According to an exemplary embodiment, if the power needed to meet the expected heating or cooling load increases compared to the load predicted when the user set the desired interior temperature, the system may alert the user with an audio, visual, and/or tactile alarm and prompt the user to choose how to proceed (e.g., what trade-off the user wants to make).

It is important to note that the construction and arrangement of the HVAC system as shown in the various exemplary embodiments is illustrative only. Although only a few embodiments of the present application have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited in the application. For example, elements shown as integrally formed may be constructed of multiple parts or elements, the position of elements may be reversed or otherwise varied, and the nature or number of discrete elements or positions may be altered or varied. Accordingly, all such modifications are intended to be included within the scope of the present application. The order or sequence of any process or method steps may be varied or re-sequenced according to alternative embodiments. Any means-plus-function clause is intended to cover the structures described herein as performing the recited function and not only structural equivalents but also equivalent structures. Other substitutions, modifications, changes and omissions may be made in the design, operating conditions and arrangement of the exemplary embodiments without departing from the scope of the present application.

Embodiments within the scope of the present invention may include program products comprising computer or machine-readable media for carrying or having machine-executable instructions or data structures stored thereon. Such computer or machine-readable media can be any available media which can be accessed by a general purpose or special purpose computer or other machine with a processor. By way of example, such computer or machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of computer or machine-readable media. Computer or machine-executable instructions comprise, for example, instructions and data which cause a general purpose computer, special purpose computer, or special purpose processing machines to perform a certain function or group of functions. Software implementations of the present invention could be accomplished with standard programming techniques with rule based logic and other logic to accomplish the various connection steps, processing steps, comparison steps and decision steps.

The foregoing description of embodiments of the application has been presented for purposes of illustration and description. It is not intended to be exhaustive or to limit the application to the precise form disclosed, and modifications and variations are possible in light of the above teachings, or may be acquired from practice of the application. The embodiments were chosen and described in order to explain the principles of the application and its practical application to enable one skilled in the art to utilize the application in various embodiments and with various modifications as are suited to the particular use contemplated.

Although the description contains many specificities, these specificities are utilized to illustrate some of the preferred embodiments of this application and should not be construed as limiting the scope of the application. The scope of this application fully encompasses other embodiments which may become apparent to those skilled in the art. All structural, chemical, and functional equivalents to the elements of the above-described application that are known to those of ordinary skill in the art are expressly incorporated herein by reference and are intended to be encompassed by the present application. A reference to an element in the singular is not intended to mean one and only one, unless explicitly so stated, but rather it should be construed to mean at least one. Furthermore, no element, component or method step in the present disclosure is intended to be dedicated to the public.

## Claims

1. A climate control system for vehicle installation, comprising:
a heating and cooling system configured to provide at least one of heating and cooling of air in a cabin of the vehicle;
an energy storage module configured to provide energy to the heating and cooling system;
a user interface for receiving user input and for providing output to the user; and
a controller configured to operate the heating and cooling system, the controller receiving weather data and receiving temperature data related to a temperature outside of the cabin and a temperature inside of the cabin, the controller calculating an expected heating or cooling load based on a temperature setpoint, the weather data, and the temperature data, the controller calculating whether there is sufficient energy in the energy storage module to meet the expected load, the controller controlling normal operation of the heating and cooling system if there is sufficient energy and prompting for user action via the user interface if there is not sufficient energy.

2. The system of claim 1, wherein the energy storage module comprises at least one of a battery, a thermal storage module, and a fuel tank.

3. The system of claim 1, wherein the user interface comprises at least one of a display, a speaker, and one or more lights configured to provide output to the user.

4. The system of claim 1, wherein the user interface further comprises at least one of a rotary knob, a pushbutton switch, a sliding switch, and a touchscreen panel configured to receive user input.

5. The system of claim 1, wherein the weather data comprises at least one of current weather data, predicted weather data, and historical weather data.

6. The system of claim 1, wherein the controller calculates the expected heating or cooling load further based on at least one of pressure data from a pressure sensor, humidity data from a humidity sensor, and position data from a GPS receiver.

7. The system of claim 1, wherein the controller calculates a temperature difference between the temperature outside of the cabin and the temperature inside of the cabin, the calculating the expected heating or cooling load comprises calculating the expected heating or cooling load based on the weather data and the temperature difference;

8. The method of claim 1, wherein the controller calculates an available heating or cooling time based on the amount of energy in the energy storage module, the calculating whether there is sufficient energy in the energy storage module to meet the expected load comprises calculating whether the heating or cooling time is sufficient for the inside temperature to meet the temperature setpoint.

9. The method of claim 1, wherein the prompting for user action on a user interface if there is not sufficient energy comprises prompting for continued normal operation until energy is exhausted.

10. The method of claim 9, wherein the controller calculates optimized parameters for the vehicle heating and cooling system to run for a specified run time based on an estimated temperature difference between the inside and outside, based on an estimated outside temperature, and based on expected weather conditions if the user does not select normal operation.

11. The method of claim 8, wherein the controller periodically, receives the outside temperature, calculates the temperature difference, calculates the energy needed to maintain the temperature setpoint based on the temperature difference and expected weather conditions, calculates whether there is sufficient energy in the energy storage module to meet the calculated energy needed, controls normal operation if the energy is sufficient, and controls alternate operation based on optimized parameters for the heating and cooling system to run for a specified run time based on the temperature difference, the outside temperature, and the expected weather conditions.

12. A method for operating a heating and cooling system powered by an energy storage module, the method comprising:
receiving weather data at a controller;
receiving temperature data related to a temperature outside of the cabin and a temperature inside of the cabin at the controller;
calculating an expected heating or cooling load based on a temperature setpoint, the weather data, and the temperature data using the controller;
calculating whether there is sufficient energy in the energy storage module to meet the expected load using the controller;
controlling normal operation of the heating and cooling system using the controller if there is sufficient energy; and
prompting for user action on a user interface if there is not sufficient energy.

13. The method of claim 12, further comprising:
calculating a temperature difference between the temperature outside of the cabin and the temperature inside of the cabin using the controller,
wherein the calculating the expected heating or cooling load comprises calculating the expected heating or cooling load based on the weather data and the temperature difference;

14. The method of claim 12, further comprising:
calculating an available heating or cooling time based on the amount of energy in the energy storage module using the controller,
wherein calculating whether there is sufficient energy in the energy storage module to meet the expected load comprises calculating whether the heating or cooling time is sufficient for the inside temperature to meet the temperature setpoint.

15. The method of claim 12, wherein the prompting for user action on a user interface if there is not sufficient energy comprises:
prompting for continued normal operation until energy is exhausted; and
prompting to calculate optimized parameters for the heating and cooling system to run for a specified run time based on an estimated temperature difference between the inside and outside, based on an estimated outside temperature, and based on expected weather conditions.

16. The method of claim 12, wherein the controller periodically performs a maintenance process comprising:
receiving the outside temperature;
calculating the temperature difference;
calculating the energy needed to maintain the temperature setpoint based on the temperature difference and expected weather conditions;
calculating whether there is sufficient energy in the energy storage module to meet the calculated energy needed;
controlling normal operation if the energy is sufficient; and
controlling alternate operation based on optimized parameters for the heating and cooling system to run for a specified run time based on the temperature difference, the outside temperature, and the expected weather conditions.

17. A method for operating a vehicle heating and cooling system powered by an energy storage module, the method comprising:
receiving weather data at a controller;
receiving temperature data related to a temperature outside of the cabin and a temperature inside of the cabin at the controller;
calculating a temperature difference between the temperature outside of the cabin and the temperature inside of the cabin using the controller,
calculating an expected heating or cooling load based on a temperature setpoint, the weather data, and the temperature difference using the controller;
calculating whether there is sufficient energy in the energy storage module to meet the expected load using the controller;
controlling normal operation of the heating and cooling system using the controller if there is sufficient energy; and
prompting for user action on a user interface if there is not sufficient energy.

18. The method of claim 17, wherein the prompting for user action on a user interface if there is not sufficient energy comprises:
prompting for continued normal operation until energy is exhausted; and
prompting to calculate optimized parameters for the heating and cooling system to run for a specified run time based on an estimated temperature difference between the inside and outside, based on an estimated outside temperature, and based on expected weather conditions.
